(19) Europäisches Patentamt
European Patent Office
Office européen des brevets

(11) **EP 2 479 296 B1**

(12) **EUROPÄISCHE PATENTSCHRIFT**

(45) Veröffentlichungstag und Bekanntmachung des Hinweises auf die Patenterteilung:
**21.06.2017   Patentblatt 2017/25**

(51) Int Cl.:
*C22C 1/02* *(2006.01)*          *C22C 1/03* *(2006.01)*
*C22C 21/02* *(2006.01)*          *C22C 21/04* *(2006.01)*
*C22F 1/043* *(2006.01)*

(21) Anmeldenummer: **11151662.1**

(22) Anmeldetag: **21.01.2011**

(54) **Verfahren zur Herstellung von einer Si-Primärpartikel freien Aluminiumlegierung**

Method of preparing an aluminium alloy free of Si primary particles

Procédé de fabrication d'un alliage d'aluminium sans particule primaire Si

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.07.2012   Patentblatt 2012/30**

(73) Patentinhaber: **Hydro Aluminium Rolled Products GmbH**
**41515 Grevenbroich (DE)**

(72) Erfinder:
• **Grün, Gerd-Ulrich**
  **53844, Troisdorf (DE)**
• **Janssen, Hartmut**
  **40724, Hilden (DE)**
• **Kuhnke, Katrin**
  **42719, Solingen (DE)**
• **Droste, Werner**
  **53113, Bonn (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 0 301 472          CN-A- 101 823 190
CN-C- 100 525 987          DE-A1- 19 733 204
DE-A1- 19 852 820          GB-A- 1 363 977
US-A- 3 843 333          US-A- 4 126 486

• **DATABASE CA [Online] CHEMICAL ABSTRACTS SERVICE, COLUMBUS, OHIO, US; 13. November 2000 (2000-11-13), LIU, ZHIYONG ET AL: "Influence of AlTi5 , AlTi5Bi on the grain refinement and the ambient tensile properties of ZL108 alloy", XP002654406, gefunden im STN Database accession no. 2000:791611 & LIU, ZHIYONG ET AL: "Influence of AlTi5 , AlTi5Bi on the grain refinement and the ambient tensile properties of ZL108 alloy", TEZHONG ZHUZAO JI YOUSE HEJIN , (5), 11-12 CODEN: TZJHEE; ISSN: 1001-2249, 2000, XP009150836,**

**Beschreibung**

Die Erfindung betrifft ein Verfahren zur Herstellung eines Aluminiumlegierungsproduktes.

Aluminiumlegierungen mit Si-Gehalten von 4,5 Gew.-% bis 12 Gew.-% werden aufgrund des relativ niedrigen Schmelzpunktes vor allem zum Löten von Bauteilen, vorzugsweise Aluminiumbauteilen genutzt. Das Aluminiumlot bestehend aus einer AlSi-Aluminiumlegierung kann beispielsweise in Form von Lötfolien aber auch durch einen Verbundwerkstoff, welcher eine AlSi-Aluminiumlegierungsschicht aufweist, bereitgestellt werden. Insbesondere wenn eine Vielzahl von Lötstellen zu löten sind und die Bauteile eine komplexe Form, wie beispielsweise Wärmetauscher aufweisen, werden häufig eine AlSi-Aluminiumlegierungsschicht aufweisende Bänder, Bleche oder Halbzeuge eingesetzt. Wärmetauscher von Kraftfahrzeugen werden häufig unter Verwendung eines Aluminiumlots gelötet. Die Lotschichten sind im Allgemeinen sehr dünn ausgebildet, um einerseits Material einzusparen und andererseits die beim Verbundwerkstoff vorhandenen Eigenschaften des Kernwerkstoffs nicht negativ zu beeinflussen. Aufgrund der zunehmenden Verringerung der Dicke der Lotschichten und des Kernwerkstoffs, werden an das Gefüge der Lotschichten erhöhte Anforderungen gestellt. Aus dem Formgussbereich ist bekannt, veredelnde Elemente wie Strontium und Natrium oder feinende Elemente wie Antimon in die Legierung aufzunehmen, um das eutektische Gefüge bzw. die eutektischen Gefügeanteile zu beeinflussen. Diese veredelnden oder feinenden Legierungselemente kommen allerdings beim Einsatz in Aluminiumloten nicht in Frage, da sie den Lötprozess stören können und das Recycling erschweren. Bei der konventionellen Herstellung von AlSi-Aluminiumlegierungen wird zunächst ein Hüttenaluminium gemeinsam mit Silizium in einem Schmelz- bzw. Gießofen geschmolzen und andere Legierungselemente zulegiert. Zur Kornfeinung der primären alpha-Aluminiumphase werden in der Regel Aluminiumtitanborid (AlTiB)-Drähte verwendet und der Legierung im schmelzflüssigen Zustand zugeführt.

Hieraus resultiert ein feines Gefüge, welches für die AlSi-Aluminiumlegierung für den Einsatz als Lotschicht bisher ausreichte. Allerdings wurde festgestellt, dass einerseits der Lötvorgang bei extrem dünnen Aluminiumlotschichten nicht ausreichend prozesssicher durchgeführt werden konnte. Andererseits traten nach dem Löten Anschmelzungen und Erosion bzw. Löcher in den Bauteilen auf. Hiervon betroffen sind besonders Bauteile mit dünnen Wandstärken.

Die US-Patentschrift 3,843,333 A beschreibt ein plattiertes Aluminium-Lötblech, insbesondere zum Tauchlöten. Hierbei wird eine hochschmelzende und siliziumreiche Aluminiumlegierung mit einer niedrigschmelzenden Aluminiumlegierung zum Beispiel durch Walzplattieren beschichtet. Im Wesentlichen alle Siliziumpartikel in der Beschichtung sollen eine Ausdehnung von kleiner 7 μm aufweisen.

Hiervon ausgehend liegt der vorliegenden Erfindung die Aufgabe zugrunde, ein Verfahren zur Herstellung eines Aluminiumlegierungsproduktes aufweisend eine AlSi-Aluminiumlegierung zur Verfügung zu stellen, welche einen verbesserten Lötprozess gewährleistet.

Die genannte Aufgabe wird mit einem Verfahren gemäß Patentanspruch 1 gelöst. Gemäß der Lehre der Erfindung wird ein Aluminiumlegierungsprodukt zumindest teilweise aus einer AlSi-Aluminiumlegierung hergestellt, welche die folgenden Anteile an Legierungsbestandteilen in Gewichtsprozent aufweist:

$$4,5\ \% \leq\ \mathrm{Si}\ \leq 12\ \%,$$

$$\mathrm{P}\ \leq 10\ \mathrm{ppm},$$

$$\mathrm{B}\ \leq 10\ \mathrm{ppm}$$

und optional

$$\mathrm{Ti} \leq 0,2\ \%,$$

$$\mathrm{Fe} \leq 0,8\ \%,$$

$$\mathrm{Cu} \leq 0,3\ \%,$$

$$Mn \leq 0,10 \ \%,$$

$$Mg \leq 2,0 \ \%,$$

$$Zn \leq 0,20 \ \%,$$

$$Cr \leq 0,05 \ \%,$$

Rest Al und unvermeidbare Verunreinigungen, einzeln maximal 0,05 Gew.-% in Summe maximal 0,15 Gew.-%, wobei die Aluminiumlegierung frei von primären Si-Partikeln mit einer Größe von mehr als 10 $\mu$m ist.

Die Erfinder haben erkannt, dass die Lötprobleme insbesondere durch primäre Si-Partikel hervorgerufen werden, insbesondere wenn diese eine Größe von mehr als 10 $\mu$m aufweisen. Bevorzugt weist die erfindungsgemäß hergestellte Aluminiumlegierung gar keine primäre Si-Partikel mehr auf. Primäre Si-Partikel sind Partikel, die aus reinem Silizium bestehen und in kristalliner Form in konventionellen Aluminiumlegierungen vorhanden sind. Die Erfinder haben jedoch festgestellt, dass während des Lötvorganges, primäre Si-Partikel, die größer als 10 $\mu$m sind, zu einem lokalen Überangebot an Si in der Lotschicht führen und dadurch der Kernwerkstoff ebenfalls lokal in der Umgebung der primären Si-Partikel aufgeschmolzen wird. Dies führt dann zur Erosion oder Ausbildung eines Loches in dem mit einer Aluminiumlotschicht überzogenen Produkt während des Lötens. Die Vermeidung dieser primären Si-Partikel mit einer Größe von mehr als 10 $\mu$m hat zur Folge, dass der Lötvorgang einwandfrei durchgeführt werden kann und es nicht zu einer lokalen Aufschmelzung des Aluminiumlegierungskernwerkstoffes kommt. Dies gilt insbesondere für Aluminiumlotschichten und Aluminiumlegierungskernwerkstoffe, die besonders dünn ausgebildet sind, beispielsweise im Bereich von 15 $\mu$m bis 30 $\mu$m für die Lotschicht und 50 $\mu$m bis 120 $\mu$m für den Kernwerkstoff liegen, da der Effekt der Lochbildung aufgrund vorhandener primärer Si-Partikel mit einer Größe von mehr als 10 $\mu$m bei diesen Schichtdicken verstärkt auftritt. Im Ergebnis kann mit der erfindungsgemäß hergestellten Aluminiumlegierung eine besonders prozesssichere Lötverbindung bereitgestellt werden.

Bevorzugt entspricht die Aluminiumlegierung abgesehen von den nicht vorhandenen primären Si-Partikeln, welche eine Größe von mehr 10 $\mu$m aufweisen, einer der Legierungsspezifikationen vom Typ AA 4043, AA 4343, AA 4045, AA 4044 oder AA 4104. Die spezifischen Legierungstypen werden in Kombination mit unterschiedlichen Aluminiumlegierungen als Aluminiumlote in ganz spezifischen Anwendungsgebieten verwendet.

Die Aluminiumlegierung vom Typ AA 4043 weist beispielsweise einen Si-Gehalt von 4,5 bis 6,0 Gew.-%, einen Fe-Gehalt von maximal 0,8 Gew.-%, einen Cu-Gehalt von maximal 0,30 Gew.-%, einen Mn-Gehalt von maximal 0,05 Gew.-%, einen Mg-Gehalt von maximal 0,1 Gew.-%, einen Zn-Gehalt von maximal 0,10 Gew.-% sowie einen Ti-Gehalt von maximal 0,20 Gew.-% auf. Typische Anwendungen der Legierung AA 4043 liegen in der Verwendung als Aluminiumlot bevorzugt in Kombination mit Flussmitteln.

Die Aluminiumlegierung AA 4343 weist beispielsweise einen Si-Gehalt von 6,8 bis 8,2 Gew.-%, einen Fe-Gehalt von maximal 0,8 Gew.-%, einen Cu-Gehalt von maximal 0,25 Gew.-%, einen Mn-Gehalt von maximal 0,10 Gew.-%, einen Zn-Gehalt von maximal 0,20 Gew.-% auf. Die Aluminiumlegierung vom Typ AA 4343 wird bevorzugt in Kombination mit Flussmitteln zum Löten in Schutzgasatmosphäre bzw. im CAB-Verfahren (Controlled Atmosphere Brazing) verwendet.

Die mit einem höheren Si-Gehalt versehene Aluminiumlegierung vom Typ AA 4045 enthält 9,0 bis 11,0 Gew.-% Si, maximal 0,8 Gew.-% Fe, maximal 0,30 Gew.-% Cu, maximal 0,05 Gew.-% Mn, maximal 0,05 Gew.-% Mg, maximal 0,10 Gew.-% Zn und maximal 0,20 Gew.-% Ti. Diese Aluminiumlegierung wird ebenfalls bevorzugt in Kombination mit Flussmitteln zum Löten in Schutzgasatmosphäre bzw. im CAB-Verfahren verwendet.

Die Aluminiumlegierung vom Typ AA 4044 enthält 7,8 Gew.-% bis 9,2 Gew.-% Si, maximal 0,8 Gew.-% Fe, maximal 0,25 Gew.-% Cu, maximal 0,10 Gew.-% Mn und maximal 0,20 Gew.-% Zn. Sie wird ebenfalls für das CAB-Lötverfahren verwendet.

Schließlich enthält die Legierung vom Typ AA 4104 9,0 bis 10,5 Gew.-% Si, maximal 0,8 Gew.-% Fe, maximal 0,25 Gew.-% Cu, maximal 0,1 Gew.-% Mn, 1,0 bis 2,0 Gew.-% Mg und maximal 0,05 Gew.-% Zn, 0,02 bis 0,20 Gew.-% Bi. Dieser Legierungstyp wird bevorzugt als Lot im Vakuumlöten eingesetzt.

Alle fünf Legierungstypen enthalten Verunreinigungen in einem Gehalt von maximal 0,05 Gew.-% einzeln und in der Summe maximal 0,15 Gew.-%. Die genannten Aluminiumlegierungen eignen sich insbesondere zur Verwendung als Lotschichten in Kombination mit unterschiedlichen Legierungstypen. Allen Legierungen ist gemein, dass diese bei konventioneller Herstellung primäre Si-Partikel aufweisen, wohingegen die erfindungsgemäß hergestellten Aluminiumlegierungen frei von primären Si-Partikeln mit einer Größe von mehr als 10 $\mu$m sind. Bevorzugt ist die erfindungsgemäß hergestellte Aluminiumlegierung darüber hinaus vollständig frei von primären Si-Partikeln, so dass besonders dünne Aluminiumlotschichten mit der erfindungsgemäß hergestellten Aluminiumlegierung bereitgestellt werden können, welche prozesssichere Lotverbindungen zur Verfügung stellen.

Wird gemäß einer ersten Ausgestaltung der erfindungsgemäß hergestellten Aluminiumlegierung der P-Gehalt auf maximal 5 ppm und/oder der B-Gehalt auf maximal 7 ppm beschränkt, kann die Bildung von primären Si-Partikeln in der Aluminiumlegierung noch besser unterdrückt werden.

Ein optimales Ergebnis im Hinblick auf ein feines Gefüge kann gemäß einer nächsten Ausgestaltung der Aluminiumlegierung dadurch erreicht werden, dass der Ti-Gehalt maximal 600 ppm, vorzugsweise 140 ppm bis 240 ppm beträgt. Durch die Verringerung des Ti -Gehalts auf maximal 600ppm, bzw. auf 140 ppm bis 240 ppm die Gießbarkeit verbessert werden.

Entsprechende Aluminiumlegierungsprodukte können extrem dünne Lotschichten aufweisen und dennoch sehr gut lötbar sein.

Eine besonders einfache Bereitstellung der Aluminiumlegierungsprodukte wird dadurch erreicht, dass das Aluminiumlegierungsprodukt ein Band ist und mindestens eine weitere Schicht aus Aluminium oder einer weiteren Aluminiumlegierung aufweist. Das bandförmige Aluminiumlegierungsprodukt kann eine sehr dünne Aluminiumlotschicht bestehend aus der erfindungsgemäß hergestellten Aluminiumlegierung aufweisen und dennoch besonders gute Löteigenschaften besitzen. Das Band kann ohne weiteres in eine Vielzahl von Blechen vereinzelt werden, welche dann weiteren Arbeitsschritten unterworfen werden, um lötbare Halbzeuge oder fertige Bauteile herzustellen.

Das Band wird durch ein Walzplattieren oder ein Verbundgießen hergestellt, wobei beide Aluminiumlegierungsschichten eine stoffschlüssige Verbindung an ihrer Grenzfläche zueinander eingehen. Beide Verfahren können wirtschaftlich zur Erzeugung von Aluminiumverbundwerkstoffen eingesetzt werden, welche eine Schicht aus einer erfindungsgemäß hergestellten Aluminiumlegierung als Aluminiumlotschicht aufweisen.

Da mit der erfindungsgemäß hergestellten Aluminiumlegierung eine besonders prozesssicher herstellbare Lotverbindung bereitgestellt werden kann, ist es vorteilhaft, wenn das Aluminiumlegierungsprodukt als ein Teil eines gelöteten Bauteils, insbesondere eines Wärmetauschers ausgebildet ist. Wie bereits zuvor ausgeführt, sind Lötverbindungen ein wichtiger Bestandteil bei unterschiedlichen Bauteilen, insbesondere bei Wärmetauschern von Kraftfahrzeugen. Das Aluminiumlegierungsprodukt ist auf besondere Art und Weise geeignet, prozesssicher Lötverbindungen bereitzustellen.

Zur Herstellung eines Aluminiumlegierungsprodukts kann ein Barren bestehend aus einer erfindungsgemäß hergestellten Aluminiumlegierung verwendet werden, wobei der gefräste Barren keine primären Si-Partikel mit einer Größe von mehr als 10 $\mu$m aufweist, wobei die Anzahl der primären Si-Partikel an einer senkrecht zur Gießrichtung herausgeschnittenen Scheibe des gefrästen Barrens jeweils in der Barrenmitte an der Oberfläche, in einer Tiefe von einem Viertel der Dicke des Barrens und im Zentrum des Barrens auf einer Fläche von mindestens 600 mm$^2$ bestimmt werden. Der Barren ist daher besonders geeignet, zu einem Plattierblech weiterverarbeitet zu werden oder zu einer Lötfolie. Das Plattierblech wird üblicher Weise auf den Kernwerkstoff bzw. Kernbarren aufgebracht und entsprechend walzplattiert, um einen lötbaren Aluminiumverbundwerkstoff bereitzustellen. Im Ergebnis kann der Barren zur Herstellung von besonders gut lötfähigen Aluminiumlegierungsprodukten verwendet werden. Bevorzugt ist der Barren frei von primären Si-Partikeln, d.h. in einer aus dem gefrästen Barren senkrecht zur Gießrichtung des Barrens heraus getrennten Scheibe kann in der Mitte dieser Scheibe in Flächenbereichen von mindestens 600 mm$^2$ an der Oberfläche, in einer Höhe von einem Viertel der Barrendicke und im Zentrum des Barrens keine primären Si-Partikel ermittelt werden. Die primären Si-Partikel werden an polierten Schliffen unter dem Mikroskop innerhalb der entsprechenden Fläche ausgezählt.

Die Barren weisen, wie bereits ausgeführt, keine primären Si-Partikel mit einer Größe von mehr als 10 $\mu$m, vorzugsweise gar keine primären Si-Partikel auf. Die Barren unterscheiden sich damit deutlich von konventionell hergestellten Barren zur Herstellung von Aluminiumlegierungsprodukten.

Das Aluminiumlegierungsprodukt wird erfindungsgemäß durch ein Verfahren hergestellt, bei welchem

- Reinaluminium mit einem P-Gehalt von maximal 10 ppm und einem B-Gehalt von maximal 10 ppm sowie unvermeidbaren Verunreinigungen einzeln 0,05 Gew.-% in Summe maximal 0,2 Gew.-% in einem Schmelzofen geschmolzen wird

- in dem Schmelzofen Reinsilizium zulegiert wird bis ein Si-Gehalt von 4,5 Gew.-% bis 12 Gew.-% der Aluminiumlegierung erreicht ist,

- optional als weitere Legierungsbestandteile

  Fe mit bis zu 0,8 %,
  Cu mit bis zu 0,3 %,

Mn mit bis zu 0,10 %,
Mg mit bis zu 2,0 %,
Zn mit bis zu 0,20 %,
Cr mit bis zu 0,05 %, in Gewichtsprozent im Schmelzofen zulegiert werden oder bereits zumindest teilweise im Reinaluminium enthalten sind,

- im Schmelzofen Titan in Form einer Master- oder Vorlegierung zulegiert wird, um den Ti-Gehalt auf maximal 0,2 Gew.-% einzustellen, wobei auf die Zugabe von Kornfeinungsmitteln, welche Titanboride enthalten, verzichtet wird.

Es hat sich herausgestellt, dass Titanboride, welche zur Kornfeinung hinzugegeben werden, eine der Ursachen sind, welche zur Bildung primärer Si-Partikel mit einer Größe von mehr als 10 $\mu$m führen. Bei dem erfindungsgemäßen Verfahren wird auf die Zugabe dieser Titanboride verzichtet, so dass im Ergebnis keine primären Si-Partikel in der hergestellten Aluminiumlegierung feststellbar sind. Zur Erhöhung des Ti-Gehaltes kann beispielsweise dabei eine Master- bzw. eine Vorlegierung in Form einer AlTi5- oder AlTi10-Legierung verwendet werden. Diese Aluminiumlegierungen können sowohl in Stabform, in Tablettenform als auch als Massel der Schmelze zulegiert werden.

Eine weitere Steigerung der Prozesssicherheit bei der Herstellung von primär Si-Partikel freien Aluminiumlegierungen wird dadurch erreicht, dass das Reinaluminium einen P-Gehalt von maximal 5ppm und/oder einen B-Gehalt von maximal 7 ppm aufweist. Es hat sich gezeigt, dass diese Gehalte an Phosphor und/oder Bor zu einer weiteren Reduzierung der Größe der primären Si-Partikel sowie zu vollständig primären Si-Partikel freien Aluminiumlegierungen führen.

Schließlich kann das Gefüge der erfindungsgemäßen Aluminiumlegierung besonders fein ausgebildet werden und gleichzeitig die Gießeigenschaften der Aluminiumlegierung nicht verschlechtert werden, indem der Ti-Gehalt auf maximal 600 ppm, vorzugsweise 140 ppm bis 240 ppm beschränkt wird.

Die Erfindung wird im Weiteren anhand von Ausführungsbeispielen in Verbindung mit der Zeichnung näher erläutert. In der Zeichnung zeigt

Fig. 1 in einer Schnittansicht einen gefrästen Gießbarren mit eingezeichneten Flächen zur Bestimmung der Anzahl der primären Si-Partikel,

Fig. 2,3 eine stark vergrößerte Ansicht einer Schnittfläche von Barren bei konventioneller Herstellung,

Fig. 4,5 eine stark vergrößerte Ansicht einer Schnittfläche von Barren zweier Ausführungsbeispiele der Erfindung.

Es wurden insgesamt vier Ausführungsbeispiele untersucht, welche in ihrer Zusammensetzung sehr ähnlich sind und sich lediglich durch die Art der Fertigung der Aluminiumlegierung unterschieden. Die Gehalte der Legierungsbestandteile der Ausführungsbeispiele sind in Tabelle 1 in Gewichtsprozent bzw. ppm angegeben.

Tabelle 1

| Probe | | Si | Fe | Cu | Mn | Mg | Ti | Cr | Zn | B | P |
|---|---|---|---|---|---|---|---|---|---|---|---|
| V1a | SdT | 10,2 | 0,07 | <0,001 | <0,005 | <0,005 | 50ppm | <0,001 | 0,005 | 11ppm | 7ppm |
| V1b | SdT | 10,1 | 0,07 | <0,001 | <0,005 | <0,005 | 30ppm | <0,001 | 0,005 | 11ppm | 7ppm |
| V4a | Erf | 10,0 | 0,06 | <0,001 | <0,005 | <0,005 | 50ppm | <0,001 | <0,005 | 7ppm | 4ppm |
| V4b | Erf | 10,0 | 0, 04 | 0,0059 | <0,005 | <0,005 | 30ppm | <0,001 | 0,05 | 2ppm | <4ppm |

Wie aus der Tabelle 1 zu erkennen ist, weisen die konventionell hergestellten Vergleichslegierungen V1a, V1b einen Gehalt von etwa 10 % Silizium auf. Die Weiteren Bestandteile der Vergleichslegierungen V1a und V1b können der Tabelle 1 entnommen werden. Dies gilt auch für die erfindungsgemäßen Ausführungsbeispiele, welche ebenfalls einen Si-Gehalt von etwa 10 % aufweisen. Sowohl die Vergleichsbeispiele V1a und V1b als auch die erfindungsgemäßen Ausführungsbeispiele V4a und V4b weisen P-Gehalte von weniger als 10 ppm auf. Die B-Gehalte der Vergleichslegierungen V1a und V1b liegen oberhalb von 10 ppm, die der erfindungsgemäßen Ausführungsbeispiele V4a und V4b bei weniger als 10 ppm.

Mit der Vergleichslegierung V1a wurden dann folgende Versuche unternommen. Zunächst wurde die Legierung auf Basis von einem Standard Hüttenaluminium und Silizium in Gießereiqualität gemeinsam unter Verwendung von Kornfeinungsmitteln in Form von AlTiB-Stäben konventionell hergestellt.

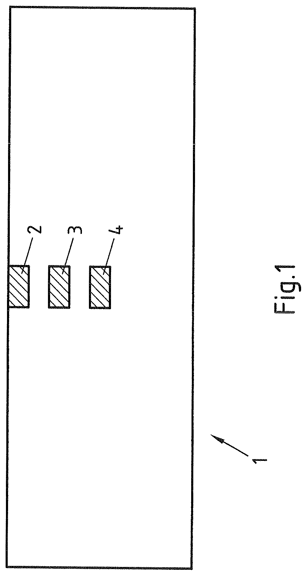

Der Barren im Gießformat 600 mm x 200 mm wurde gegossen und gefräst, d.h. die Randschale, welche bis etwa 20 mm dick ist, wurde entfernt. Aus dem so gefrästen Barren wurde eine wie in Figur 1 dargestellte Scheibe senkrecht zur Gießrichtung herausgetrennt. An drei verschiedenen Stellen, nämlich in der Mitte des Barrens an der Oberfläche 2, auf Höhe ein Viertel der Barrendicke 3 und im Zentrum des Barrens 4 sind Flächenausschnitte von 30 mm x 20 mm auf das Vorhandensein von primären Si-Partikeln untersucht worden.

Die Flächenausschnitte von 30 mm x 20 mm wurden an den genannten Stellen von der Barrenscheibe abgetrennt und in ein Epoxidharz eingebettet, um das Probenhandling zu erleichtern. Anschließend wurden die eingebetteten Proben zunächst manuell mit SiC-Papier und Schleifleinen bzw. -vlies mit einer Körnung von bis zu 2400 geschliffen. Die Dauer der Schleifprozesse betrug bei den verschiedenen Körnungen etwa 10 bis 20 s. Das anschließende halbautomatische Polieren erfolgte zunächst mit $6\mu$m und anschließend mit $3\mu$m polykristalliner Diamantsuspension für jeweils 8 bis 9 Minuten. Das Endpolieren erfolgte mit einer Oxid-Polier-Suspension mit einer Körnung von $0,25\mu$m für etwa 2 bis 5 Minuten. Die so präparierten Schliffe wurden unter einem Auflichtmikroskop mit 100facher bis 200facher Vergrößerung ausgewertet.

Gleichzeitig wurden mit der Vergleichslegierung V1a unterschiedliche Fertigungsparameterstudien, beispielsweise unterschiedliche Abstehzeiten, mit oder ohne Argongasspülung, Änderung des Gasspülungsgemisches durchgeführt. Es zeigte sich, dass unabhängig von den zuletzt genannten Parametern der Schmelzebehandlung grobe primäre Si-Partikel in den Walzbarren vorhanden waren. Die Ergebnisse der Anzahl und der Größe der primären Si-Partikel der Vergleichslegierung V1a zeigt die Tabelle 2. An der Oberfläche zeigte sich eine Häufung der primären Si-Partikel mit einer Größe von mehr als 12 $\mu$m.

Die Vergleichslegierung V1b wurde analog zur Vergleichslegierung V1a gefertigt, wobei jedoch die Schmelztemperatur vor dem Gießen des Walzbarrens von etwa 750 °C auf 850 °C angehoben wurde. Aber auch die Versuchslegierung V1b zeigte deutlich das Vorhandensein von groben primären Si-Partikeln, welches insbesondere bei der Verwendung als Lotschicht, beispielsweise bei Wärmetauschern, problematisch ist. Die Ergebnisse der Vergleichslegierungen sind in Tabelle 2 dargestellt.

Tabelle 2

| Probe | Anzahl der primären Si-Partikel | | | Durchschnittl. Größe der primären Si-Partikel ($\mu$m) |
|-------|-------------|-----------------|----------------|------------------------------------------------|
|       | Oberfläche  | 1/4 Barrendicke | Barrenzentrum  |                                                |
| V1a   | 53          | 29              | 171            | 12 - 22                                        |
| V1b   | 63          | 21              | 211            | 12 - 28                                        |
| V4a   | 0           | 0               | 0              | 0                                              |
| V4b   | 0           | 0               | 0              | 0                                              |

Die erfindungsgemäß hergestellten Legierungen V4a und V4b wurden dagegen ohne die Verwendung von Kornfeinungsmitteln, welche Titanboride enthalten, hergestellt. Nach dem Gießen wurden entsprechend auch wie in Figur 1 dargestellt eine Scheibe aus einem gegossenen Barren herausgetrennt und die Oberflächenbereiche untersucht. Überraschenderweise konnten, wie in Tabelle 2 dargestellt, in den untersuchten Oberflächenbereichen keine primären Si-Partikel festgestellt werden. Die beiden erfindungsgemäß hergestellten Legierungen V4a und V4b unterschieden sich nicht in den Verfahrensparametern von der Vergleichslegierung V1a, lediglich die Kornfeinung wurde durch die Zugabe von AlTi5 bzw. AlTi10 Master- bzw. Vorlegierungen erreicht und nicht unter Zugabe von Titanboriden.

Die Versuchslegierung V4b unterscheidet sich darüber hinaus von der Versuchslegierung V4a dadurch, dass hoch reines Silizium verwendet wurde, um den Einfluss der Reinheit des Siliziums auf die Bildung der primären Si-Partikel zu klären. Die Versuchslegierung V4a wurde dagegen durch Zulegieren von Silizium, welches für Gießereien vorgesehen ist, erzeugt. Es zeigte sich, dass es unabhängig von der Reinheit des Siliziums zu keiner Ausbildung von groben primären Si-Partikeln kommt, sofern auf die Zugabe von Titanboriden zur Kornfeinung verzichtet wird. Die erfindungsgemäßen Gehalte an Ti von 50 und 30 ppm wurden durch Zugabe von einer handelsüblichen AlTi5-Vorlegierung erreicht.

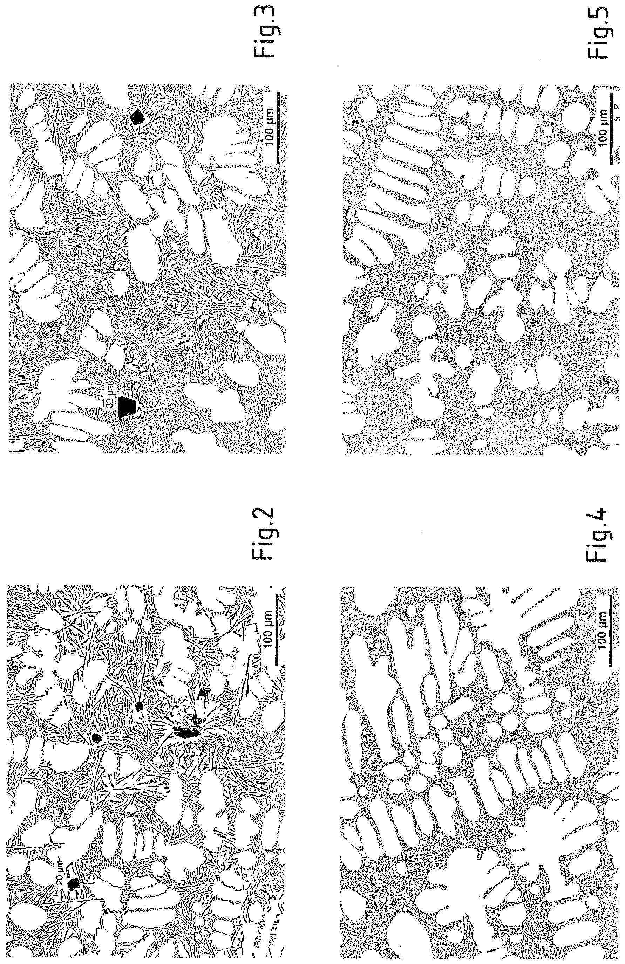

Aus den vier verschiedenen Aluminiumlegierungen wurden Barren gegossen und eine Scheibe jeweils senkrecht zur Gießrichtung aus den Barren herausgetrennt. Flächenbereiche von 30 mm x 20 mm wurden an den Stellen 2,3,4 zu Schliffen präpariert und die Anzahl der primären Si-Partikel bestimmt. Die in den Figuren 2,3,4 und 5 dargestellten Flächenbereiche stammen aus dem Zentrum der Barren. Die stark vergrößerten Aufnahmen in den Figuren 2,3,4 und 5 haben eine Größe von etwa 500 $\mu$m x 375 $\mu$m.

Figur 2 zeigt eine vergrößerte Ansicht der Schlifffläche eines Barrens aus dem Barrenzentrum aus der Vergleichslegierung V1a. Das gleiche zeigt Figur 3 aus der Vergleichslegierung V1b. In beiden Schliffen ist deutlich zu erkennen, dass grobe primäre Si-Partikel vorhanden sind, welche eine Größe von etwa 20 $\mu$m und mehr aufweisen.

Dagegen zeigen die Figuren 4 und 5, welche den erfindungsgemäß hergestellten Legierungen V4a und V4b zugeordnet sind, keine primären Si-Partikel in den vergrößerten Schnittansichten.

Die erfindungsgemäß hergestellte Aluminiumlegierung kann insofern besonders gut als Aluminiumlotschicht verwendet werden, da diese insbesondere auch extrem dünne Lotschichten ermöglicht, ohne dass es zu Problemen in Bezug auf die Lochbildung während des Lötvorgangs kommt. Insofern können unter Verwendung der erfindungsgemäß hergestellten Aluminiumlegierung besonders gut lötbare Aluminiumlegierungsprodukte zur Verfügung gestellt werden.

**Patentansprüche**

1.  Verfahren zur Herstellung eines Aluminiumlegierungsprodukts zumindest teilweise bestehend aus einer Aluminiumlegierung mit folgenden Anteilen an Legierungsbestandteilen in Gewichtsprozent:

$$4,5 \% \leq \quad Si \quad \leq 12 \%,$$

$$P \quad \leq 10 \ ppm$$

$$B \quad \leq 10 \ ppm$$

und optional

$$Ti \quad \leq 0,2 \%,$$

$$Fe \quad \leq 0,8 \%,$$

$$Cu \quad \leq 0,3 \%,$$

$$Mn \quad \leq 0,10 \%,$$

$$Mg \quad \leq 2,0 \%,$$

$$Zn \quad \leq 0,20 \%,$$

$$Cr \quad \leq 0,05 \%,$$

Rest Al und unvermeidbare Verunreinigungen, einzeln maximal 0,05 Gew.-% in Summe maximal 0,15 Gew.-%, wobei die Aluminiumlegierung frei von primären Si-Partikeln mit einer Größe von mehr als 10 $\mu$m ist, wobei das Aluminiumlegierungsprodukt ein Band ist und mindestens eine weitere Schicht aus Aluminium oder einer Aluminiumlegierung aufweist und das Band durch ein Walzplattieren oder ein Verbundgießen hergestellt ist, bei welchem

- Reinaluminium mit einem P-Gehalt von maximal 10 ppm und einem B-Gehalt von maximal 10 ppm, Rest Aluminium mit unvermeidbaren Verunreinigungen einzeln 0,05 Gew.-% in Summe maximal 0,2 Gew.-% in einem Schmelzofen geschmolzen wird,
- optional als weitere Legierungsbestandteile
Fe mit bis zu 0,8 %,
Cu mit bis zu 0,3 %,

Mn mit bis zu 0,10 %,
Mg mit bis zu 2,0 %,
Zn mit bis zu 0,20 %,
Cr mit bis zu 0,05 %,

in Gewichtsprozent im Schmelzofen zulegiert werden oder bereits zumindest teilweise im Reinaluminium enthalten sind,

- im Schmelzofen Silizium zulegiert wird bis ein Si-Gehalt von 4,5 Gew.-% bis 12 Gew.-% der Aluminiumlegierung erreicht ist und
- im Schmelzofen Titan in Form einer Master- oder Vorlegierung zulegiert wird, um den Ti-Gehalt auf maximal 0,2 Gew.-% einzustellen, wobei auf die Zugabe von Kornfeinungsmitteln, welche Titanboride enthalten, verzichtet wird.

2. Verfahren nach Anspruch 1,

   **dadurch gekennzeichnet, dass**
   das Reinaluminium einen P-Gehalt von maximal 5ppm und/oder einen B-Gehalt maximal 7 ppm aufweist.

3. Verfahren nach einem der Ansprüche 1 oder 2,
   **dadurch gekennzeichnet, dass**
   der Ti-Gehalt auf maximal 600 ppm, vorzugsweise 140 ppm bis 240 ppm beträgt.

4. Verfahren nach einem der Ansprüche 1 bis 3,
   **dadurch gekennzeichnet, dass**
   eine Aluminiumlotlegierung hergestellt wird.

**Claims**

1. 1. A method for producing an aluminium alloy product consisting at least partially of an aluminium alloy with the following proportions of alloy components in percentage by weight:

$$4.5 \% \leq \quad Si \quad \leq 12 \%,$$

$$P \quad \leq 10 \ ppm,$$

$$B \quad \leq 10 \ ppm$$

and optionally

$$Ti \quad \leq 0.2 \%,$$

$$Fe \quad \leq 0.8 \%,$$

$$Cu \quad \leq 0.3 \%,$$

$$Mn \quad \leq 0.10 \%,$$

$$Mg \leq 2.0 \ \%,$$

$$Zn \leq 0.20 \ \%,$$

$$Cr \leq 0.05 \ \%,$$

the remainder being Al and unavoidable impurities, individually at most 0.05 % by weight and in total at most 0.15 % by weight, wherein the aluminium alloy is free from primary Si particles with a size of more than 10 $\mu$m, wherein the aluminium alloy product is a strip and comprises at least one further layer formed from aluminium or an aluminium alloy and the strip is produced by roll cladding or composite casting, in which

- pure aluminium with a P content of at most 10 ppm and a B content of at most 10 ppm, the remainder being aluminium with unavoidable impurities individually of 0.05 % by weight and in total at most 0.2 % by weight, is melted in a smelting furnace,
- the following are optionally alloyed in the smelting furnace in percentage by weight as further alloy components or are already contained at least in part in the pure aluminium

Fe with up to 0.8 %,
Cu with up to 0.3 %,
Mn with up to 0.10 %,
Mg with up to 2.0 %,
Zn with up to 0.20 %,
Cr with up to 0.05 %,

- silicon is alloyed in the smelting furnace until a Si content from 4.5 % by weight to 12 % by weight of the aluminium alloy is achieved, and
- titanium is alloyed in the smelting furnace in the form of a master alloy in order to adjust the Ti content to a maximum of 0.2 % by weight, wherein the addition of grain refining agents containing titanium borides is omitted.

2. The method according to Claim 1,
   **characterised in that**
   the pure aluminium has a P content of at most 5 ppm and/or a B content of at most 7 ppm.

3. The method according to one of Claims 1 or 2,
   **characterised in that** the Ti content is at most 600 ppm, preferably 140 ppm to 240 ppm.

4. The method according to one of Claims 1 to 3,
   **characterised in that**
   an aluminium solder alloy is produced.


**Revendications**

1. Procédé destiné à fabriquer un produit à base d'un alliage d'aluminium, constitué au moins en partie d'un alliage d'aluminium, présentant les parts suivantes en composants d'alliage, exprimées en pourcentages en poids : de

$$4,5 \ \% \leq \ Si \ \leq \ 12 \ \%$$

$$P \ \leq \ 10 \ ppm$$

$$B \ \leq \ 10 \ ppm$$

et en option

Ti ≤ 0,2 %

Fe ≤ 0,8 %

Cu ≤ 0,3 %

Mn ≤ 0,10 %

Mg ≤ 2,0 %

Zn ≤ 0,20 %

Cr ≤ 0,05 %,

le reste d'Al et des impuretés inévitables, individuellement au maximum à raison de 0,05 % en poids, au total au maximum à raison de 0,15 % en poids, l'alliage d'aluminium étant exempt de particules primaires de Si d'une taille supérieure à 10 μm, le produit à base d'alliage d'aluminium étant une bande et comportant au moins une couche supplémentaire en aluminium ou en un alliage d'aluminium et la bande étant fabriquée par un placage-laminage ou une coulée composite, lors duquel

 - on fait fondre dans un four de fusion de l'aluminium pur avec une teneur en P d'un maximum de 10 ppm et une teneur en B d'un maximum de 10 ppm, le reste d'aluminium avec des impuretés inévitables, individuellement au maximum à raison de 0,05 % en poids, au total au maximum à raison de 0,2 % en poids,
 - en option, dans le four de fusion, on ajoute à l'alliage les composants d'alliage supplémentaires
Fe, à raison de jusqu'à 0,8 %
Cu, à raison de jusqu'à 0,3 %
Mn, à raison de jusqu'à 0,10 %
Mg, à raison de jusqu'à 2,0 %,
Zn, à raison de jusqu'à 0,20 %
Cr, à raison de jusqu'à 0,05 % en pourcentage en poids ou ils sont déjà contenus au moins partiellement dans l'aluminium pur,
 - dans le four de fusion, on ajoute à l'alliage du silicium, jusqu'à atteindre dans l'alliage d'aluminium une teneur en Si de 4,5 % en poids à 12 % en poids et
 - dans le four de fusion, on ajoute à l'alliage du titane sous la forme d'un alliage-mère ou d'un pré-alliage, pour régler la teneur en Ti à un maximum de 0,2 % en poids, sachant qu'il est renoncé à l'ajout d'agents d'affinage du grain contenant des borures de titane.

**2.** Procédé selon la revendication 1,
**caractérisé en ce que** l'aluminium pur présente une teneur en P d'un maximum de 5 ppm et/ou une teneur en B d'un maximum de 7 ppm.

**3.** Procédé selon l'une quelconque des revendications 1 ou 2,

**caractérisé en ce que** la teneur en Ti s'élève à un maximum de 600 ppm, de préférence à de 140 ppm à 240 ppm.

4. Procédé selon l'une quelconque des revendications 1 à 3,
   **caractérisé en ce qu'**on fabrique un alliage de brasure d'aluminium.

EP 2 479 296 B1

Fig.1

Fig.3

Fig.5

Fig.2

Fig.4

**IN DER BESCHREIBUNG AUFGEFÜHRTE DOKUMENTE**

**In der Beschreibung aufgeführte Patentdokumente**

- US 3843333 A